# EUROPEAN PATENT APPLICATION

(11) **EP 4 768 725 A1**
(43) Date of publication of application: **01.07.2026**
(21) Application number: 25222492.8
(22) Date of filing: 11.12.2025
(51) Int. Cl.: F04B 53/16, F04B 53/22

(54) **BASE FOR PUMPING DEVICES WITH ORIENTABLE CONNECTIONS**

(30) Priority: 27.12.2024 IT 202400030069
(71) Applicant: Dab Pumps S.p.A., 35035 Mestrino (Padova) (IT)
(72) Inventor: DAL CANTO, Riccardo, 35035 MESTRINO (PD) (IT)
(74) Representative: De Filippis, Sara

(57) **Abstract**

The present invention provides a base (10) for pumping devices, comprising at least one module (11) equipped with a support surface for coupling a pumping device. The module (11) comprises a suction connector (13) and a delivery connector (14) for connecting the suction and delivery of the pumping device to a first tubular element (18) and a second tubular element (19) respectively. The tubular elements pass through the base (10) from the lateral faces (20, 21) for connection to a hydraulic system. The first tubular element (18) and/or the second tubular element (19) can be rotated by 180° on the support surface of the module (11), allowing for a flexible configuration of the system.

## Description

The present invention relates to bases for pumping devices, and more particularly to a base for pumping devices comprising at least one module with rotatable tubular elements for flexible connection to hydraulic systems.

### Field of invention

The bases for pumping devices are widely used in various industrial and civil sectors to support and connect hydraulic pumps to piping systems. These bases provide a stable platform for mounting the pumps and facilitate the connection between the pump's suction and discharge ports and the hydraulic system piping.

### Prior art

Traditionally, pumping device bases feature suction and discharge connections on tubes that pass through the base itself from one side to the opposite side.

This rigid approach can create problems during installation, especially when the pump needs to be adapted to existing piping configurations or limited space. In many cases, installers must resort to complex piping and fitting systems to connect the pump to the hydraulic system, increasing installation costs and time.

Another common problem is the lack of flexibility in the orientation of the suction and discharge connections. This can make the access difficult for maintenance or component replacement, especially in installations with limited space. Furthermore, the rigidity of the connections can increase mechanical stress on the pipes, potentially leading to leaks or premature failure.

Standardizing pump bases can also be a challenge, as different applications and installation environments may require specific connection configurations. This often leads to the need to produce and manage a wide range of base models, increasing production costs and complicating inventory management.

### Purpose of the invention

It was realized that a foundation for pumping devices was needed that overcomes one or more of these problems.

### Object of the invention

In a first aspect, the invention relates to a base for pumping devices. The base comprises at least one module equipped with a support surface and to which one of said pumping devices can be coupled to. This module comprises a suction connector and a delivery connector for connecting the suction and delivery of the pumping device to a first tubular element and a second tubular element, respectively. These tubular elements pass through the base from the suction connector and the delivery connector, respectively, towards the outside of the base, from which they project to be connected to a hydraulic system. According to the invention, the first tubular element and/or the second tubular element can be rotated 180° on the support surface of the module.

This configuration offers greater flexibility in installing and connecting pumping devices to existing hydraulic systems, allowing the orientation of the connections to be easily adapted to the specific needs of the installation site.

The suction connector and the discharge connector may have a threaded end portion, by which they are screwed into the suction and discharge hydraulic system.

At the opposite end they may be connected to the first and second tubular element by means of rotating connection means.

The use of threaded connectors and/or rotating connection means facilitates the assembly and disassembly of the pumping device, improving accessibility for maintenance and reducing intervention times.

### Brief description of the figures

The present invention will be now described, for illustrative but not limitative purposes, according to its preferred embodiments, with particular reference to the figures of the enclosed drawings, wherein:

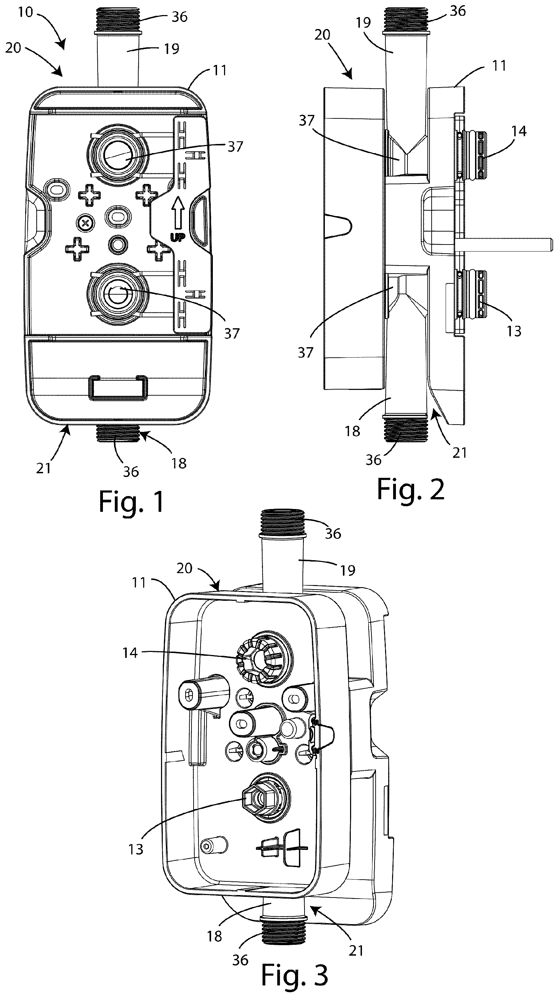

- FIG. 1: illustrates a bottom view of a base according to the invention;
- FIG. 2: shows a side view of the base of fig. 1;
- FIG. 3: presents a top view of the base of fig. 1.

A "connection" refers to a union between two or more components. The connection can be direct or indirect, physical or non-physical. The term "connection" can be considered synonymous with "connection," "coupling," "junction," or similar.

"Swivel" refers to the ability of an element to rotate or change direction relative to a fixed point. In the context of this invention, "swivel" specifically refers to the ability of tubular elements to rotate 180° on the module's support plane.

The term "module" refers to a self-contained functional unit that can be combined with other similar units to form a larger system. In the present invention, a module comprises a support surface and associated connectors and tubular elements.

"Hydraulic system" means any system that uses fluids under pressure to transmit power or perform specific functions, including but not limited to pumping systems, cooling systems, lubrication systems, and the like.

### Detailed description

The present invention relates to a base for pumping devices. In particular, the invention concerns a modular base 10 configured to support one or more pumping devices and to facilitate the connection of such devices to a hydraulic system.

The base 10 comprises at least one module 11 equipped with a support surface, on which a pumping device can be mounted. The module 11 is equipped with connectors 13, 14 for connecting the suction and delivery of the pumping device to tubular elements 18, 19 that at least partially pass through the base 10. These tubular elements 18, 19 allow the pumping device to be connected to an external hydraulic system.

An innovative feature of the present invention is the ability to rotate the tubular elements 18, 19, thus allowing greater flexibility in installing and connecting the base to existing plumbing systems with different configurations. This feature allows the base 10 to be adapted to various installation situations without the need to modify the existing plumbing system.

The base 10 for pumping devices thus allows for a flexible configuration that can be adapted to different needs.

The module 11 comprises a support platform designed to accommodate and support pumping devices. This platform provides a stable surface, on which pumping devices of various sizes and configurations can be securely mounted and secured.

The structure of the module 11 is designed to allow for versatile coupling with various types of pumping devices. The support surface may feature threaded holes, grooves, or other quick-connect elements that allow the pumping devices to be securely anchored to the module itself. This configuration ensures stability during operation and reduces vibration.

The module 11 can be made in different sizes to accommodate various pumping device sizes. For example, smaller modules can be designed for compact pumps and larger modules for larger pumping systems.

The surface of the support plate can be treated or coated to increase resistance to wear and corrosion, thus ensuring a long life of the module even in harsh industrial environments.

The module's design also allows for easy integration of suction and discharge connectors, facilitating the hydraulic connection between the pumping device and the piping system. This integration simplifies installation and maintenance of the entire pumping system.

In some configurations, the module may include additional elements such as guides for precise positioning of the pumping devices or quick-locking systems to facilitate the removal and replacement of the pumps for maintenance.

The suction connectors 13 and delivery connectors 14 are positioned on the module 11 to allow direct connection to the suction and delivery of the pumping device that will be coupled to the base.

The suction connectors 13 and 14 have a threaded end portion 36 that allows for secure connection to the suction and discharge ports of the hydraulic system. This threaded configuration ensures a stable and leak-proof connection between the pumping device and the base.

On the opposite side to the threaded portion, the connectors 13, 14 are connected to the first tubular element 18 and the second tubular element 19 respectively by means of rotating fluid connection means 37. These fluid connection means allow for 180° rotation of the tubular elements, offering flexibility in the orientation of the connections.

The arrangement of connectors 13, 14 on module 11 is designed to optimize fluid flow through the system. The suction connector 13 is typically positioned to align with the inlet of the pumping device, while the discharge connector 14 aligns with the outlet.

In some cases, connectors can be made of corrosion-resistant materials, such as stainless steel or special alloys, to ensure durability and compatibility with different types of pumped fluids. Connector dimensions and specifications can vary based on the specific needs of the pumping device for which they are intended.

The rotation of at least one of the tubular elements 18, 19 allows the outlet of these tubes to be oriented in different directions, thus adapting to multiple existing piping layouts. For example, in a system where the delivery and suction pipes are not parallel but perpendicular to each other, it is possible to rotate the second tubular element 19 to correctly align it with the system's delivery pipe.

The rotation of the second tubular element 19 is made possible by a rotating locking mechanism that allows for controlled movement of the element. This mechanism allows the tube to be securely fixed in the desired position once rotation has been performed, thus ensuring the stability and tightness of the connection.

The adaptability afforded by this rotation feature is particularly useful in retrofit situations, where the pumping device base must be integrated into existing systems with spatial constraints or non-standard configurations. For example, the ability to rotate the second tubular element 19 allows for overcoming structural obstacles or aligning with unconventionally positioned piping, without the need for substantial modifications to the existing system.

Additionally, this orientation flexibility can facilitate access for maintenance or inspection, allowing connections to be positioned to maximize accessibility in tight or complex spaces.

The rotational capability of the second tubular element 19 or the first tubular element 18, therefore, represents an ingenious solution to address installation challenges in a wide range of industrial environments and applications, helping to make the pumping device base 10 a highly versatile and adaptable product.

The rotating connection means 37 play a fundamental role in enabling the pumping system to adapt to different plant configurations. These connection means 37 are designed to allow the tubular elements 18, 19 to rotate 180° on the support surface of the module 11.

The primary function of the rotating connection means 37 is to create a flexible connection between the connectors 13, 14 and the tubular elements 18, 19. This connection allows the tubular elements 18, 19 to rotate freely, while maintaining a reliable hydraulic seal.

The rotating connection means 37 can be made in various ways. One example could be a ball joint that allows the tubular element to rotate while maintaining a sealed connection. Another example could be a rotating flange system with appropriate gaskets to ensure sealing.

This rotation capability offers significant advantages in terms of system adaptability. In one example, if the existing system features perpendicular suction and discharge pipes, the tubular elements 18, 19 can be rotated to properly align with the system pipes. In another scenario, if the system pipes are transverse, rotating the tubular elements allows for this configuration to be adapted without the need for structural modifications to the base 10 or module 11.

The operator can rotate the tubular elements 18, 19 using the rotating connection means 37, which connect them to the suction connectors 13 and delivery connectors 14. This operation allows the outlets of the tubular elements 18, 19 to be positioned on the first lateral face 20 or on the second lateral face 21 of the base 10, depending on the specific installation needs.

The invention thus conceived and illustrated here is susceptible to numerous modifications and variations, all of which fall within the scope of the inventive concept.

Furthermore, all details may be replaced by other technically equivalent elements.

Finally, the components used, provided they are compatible with the specific use, as well as the dimensions, may be any according to the needs and the state of the art.

Where features and techniques mentioned in any claim are followed by reference signs, such reference signs have been included for the sole purpose of increasing the intelligibility of the claims and, accordingly, such reference signs have no limiting effect on the interpretation of each element identified by way of example by such reference signs.

## Claims

1. A base (10) for pumping devices, comprising:
a support plane on which one of said pumping devices can be mounted,
a suction connector (13), and
a delivery connector (14),
to connect respectively the suction and delivery of said pumping device to a first tubular element (18) and a second tubular element (19), which pass through said base (10) starting from respectively the suction connector (13) and the delivery connector (14) outward for connection to a hydraulic system,
**characterized in that** the first tubular element (18) and/or the second tubular element (19) is rotatable by 180° parallel to the support plane.

2. The base (10) according to claim 1, **characterized in that** said suction connector (13) and said delivery connector (14) have a threaded terminal portion (36) by which they are screwed to the suction and delivery of said pumping device.

3. The base (10) according to claim 1 or 2, **characterized in that** said suction connector (13) and said delivery connector (14) are connected to said first and second tubular elements (18; 19) by means of rotating connections (37).

4. The base (10) according to any one of the preceding claims, **characterized in that** said rotating connections (37) comprise a ball joint allowing rotation of the tubular element (18, 19) while maintaining a sealed connection.

5. The base (10) according to any one of the preceding claims, **characterized in that** said rotating connections (37) comprise a system of rotating flanges with gaskets to ensure sealing during the rotation of the tubular elements (18, 19).

6. A pumping system, comprising:
the base (10) according to any one of claims 1-5; and
at least one pumping device coupled to said base (10).
